# EUROPEAN PATENT APPLICATION

(11) **EP 2 174 546 A1**
(43) Date of publication of application: **14.04.2010**
(21) Application number: 08805338.4
(22) Date of filing: 18.07.2008
(51) Int. Cl.: A01N 25/08, A01N 25/18, A01N 25/22, A01M 1/20

(54) **FORMULATION FOR THE RELEASE OF BIOACTIVE SUBSTANCES AND USE THEREOF AS A PEST CONTROL AGENT**

(30) Priority: 20.07.2007 ES 200702138
(71) Applicant: Universidad Politecnica De Valencia, 46022 Valencia (ES)
(72) Inventor: PRIMO YÚFERA Eduardo, E-46022 VALENCIA (ES); PRIMO MILLO, Jaime, E-46022 Valencia (ES); MOYA SANZ, Pilar, E-46022 VALENCIA (ES); NAVARRO LLOPIS, Vicente, E-46022 Valencia (ES); DOMINGUEZ RUIZ, Javier, E-46022 VALENCIA (ES); FEMENIA FERRER, Beatriu, E-46022 VALENCIA (ES); SANCHIS CABANES, Juan, E-46022 VALENCIA (ES)
(74) Representative: Ungria Lopez, Javier
(86) International application number: PCT/ES2008/000509
(87) International publication number: WO 2009/013373

(57) **Abstract**

The invention relates to a formulation for the release of bioactive substances, **characterised in that** in includes at least: (a) one or more inorganic release media; (b) one or more additives that stabilise the medium; and (c) a third component selecter from among (c.l.) one or more semichemical substances, (c.2) one or more insecticides and (c.3) combinations of c. 1 and c.2, sand inorganic release medium preferably comprising inorganic molecular sieves, clays or mixtures of sama. The invention also relates to the use thereos for pest control.

## Description

### FIELD OF THE INVENTION

The present invention belongs to the area of insecticides, in particular to the development of formulations that contain semiochemicals and/or insecticides supported on inorganic release media.

### STATE OF THE ART

Insect pests cause a drastic reduction in harvests and conventional insecticides are the traditional method of combating them. However, the abusive use of insecticides presents problems such as toxicity for man and higher animals, lack of selectiveness and resistance developed by the insects themselves. These facts, together with the increasing social and governmental awareness, have led to the search for alternative pest control systems, ecologically acceptable, which avoid the aforementioned drawbacks.

Communication between insects mainly occurs due to the release of chemical substances (semiochemicals), The use of said substances as ecological insect control method has been widely developed; in particular, techniques such as surveillance to prevent the appearance of pests, mating disruption to prevent reproduction of the Insects, mass capture to decrease the population of same or the most recent attracticide methods are successfully used at present.

A fundamental part for the success of these techniques is to have available suitable release media which meet a series of requirements such as that of providing a suitable release rate, allowing a prolonged duration of the release, avoiding degradation of the semiochemicals, being economically competitive and easy to apply in the field and not providing contaminating residues.

To date release media have been proposed which can be classified, based on their average release rate in microsprayers, sources equivalent to the female and reservoirs (Sanders, 1997). The microsprayers are made from polymeric films which envelope the active ingredient and is applied, normally, like pesticides, several times during a season depending on the insect's life cycle, The sources equivalent to females (flakes, fibres or moulded) are manually or mechanically applied and compete with the females attracting the males. The reservoirs release sexual pheromone at levels of 100 to 1000 times greater than the female.

Some of these sprayers have excellent pheromone release characteristics and have been shown to be effective throughout the season; however, none of them meets all requirements of a good release medium.

Indeed, one of the characteristics least met is that the release medium does not form a contaminating residue. This is contradictory when we are speaking of an ecological system which preserves the environment and, in turn, release media are used which constitute residues as they are made from nondegradable materials. For example, the reservoir-type release media, which are those which are currently showing themselves to be most effective, are placed in quantities between 500 and 1000 release media per hectare, according to the type of pest and, although it is recommended to remove them once exhausted, the reality is that this practice has not been performed as it takes a lot of time and money. The result is that the residues accumulate year after year in the crops.

The objective, therefore, is to manage to prepare release media of semiochemicals that are totally degradable (bio-, photo- or environmentally degradable), which are incorporated in the agricultural soil without problems once the pheromone they contain has been exhausted.

In this regard, some works centred on this purpose have already been used. Thus, patent US6159489 discloses a biodegradable sustained-release preparation release medium composed of a biodegradable aliphatic polyester wherein an active ingredient is dispersed, contained in a carrier, which can also act as a form of release regulator.

Another class of materials which has been proposed for the preparation of this ecological type of release media are those based on inorganic materials. The use of inorganic molecular sieves (IMS) and phyllosilicate sepiolite as controlled-rate release medium of semiochemical substances are disclosed, for first time, in WO-99/44420 and WO-00/02448, respectively, as a result of the research work of our group. The object of said patents is the preparation and use of supports for the sustained release of semiochemicals, based on the physiochemical modification of said materials.

The variables that control the adsorption-diffusion characteristics of these supports are structural and chemical. The structural variables relate to the size and geometry of pores and cavities, whilst the chemical variables relate to its network chemical composition.

All modifications of the geometrical and chemical variables of these materials make it possible to vary their adsorption-desorption-diffusion properties and, thus, adapt them to the release needs of each semiochemical, These characteristics, together with their low cost, zero contamination and easy handling, make these materials suitable for the preparation of commercial release compositions.

Despite their many advantages, some of these inorganic supports show an important disadvantage when applied in the field, where they are exposed to possible rain and, in some cases, to very humid atmospheres. This disadvantage arises from its hygroscopic character which is manifested by the absorption of water from the atmosphere. When, in certain applications, the release compositions are used compacted in the form of tablets, they, due to their water instability, finally disintegrate, reducing the life of the release medium as they stop releasing the semiochemical with the required rate.

On the other hand, the lack of consistency of the tablet is a serious problem when this concerns tablets for the field, generally of greater size and subject to greater handling.

Both stability problems of the release compositions in the form of tablets have been resolved by the incorporation of compacting and hydrophobic additives, in the suitable proportions, and the results of the research carried out are those which are protected in the present patent application.

The addition of these new components, all selected with ecological criteria, has made it possible to obtain stable release media in field conditions. Furthermore, in all cases, the release of the semiochemical has been slowed down, so that the release characteristics of the support have noticeably improved, prolonging the useful life of the release compositions in all their variants, including the applications by spraying.

### DESCRIPTION OF THE INVENTION

The present invention has the object of a formulation for the sustained and lasting release of semiochemical substances for the monitoring and pest control of insects, **characterised in that** it comprises at least:
a) one or more Inorganic release supports
b) one or more additives that stabilise the support and
c) a third component selected from among
c.1) one or more semiochemical substances
c.2) one or more insecticides and
c.3) combinations of c.1) and c.2).

According to a particular embodiment the formulation comprises at least:
a) one or more inorganic release supports
b) one or more semiochemical substances
c) one or more additives that stabilise the support.

In certain particular embodiments the formulation may contain, if the nature of the semiochemical so requires, one or more additives that stabilise the semiochemical substance.

Also, in certain particular embodiments, the release formulation may additionally contain complementary additives to give said formulation a highly hygrophobic character, when direct exposure is required in the field without an additional protector device.

According to the present invention, the release support is present in a quantity between 5 and 95 % by weight compared to the total weight of the release formulation, preferably, in a quantity between 10 and 90% and, more preferably, between 35 and 75%.

Said release support may be selected from among one or more materials of natural origin or synthetic origin included in the groups of inorganic molecular sieves (IMS) and of clays, in particular, phyllosilicates.

Inorganic molecular sieves (IMS) have a complex network formed by an array of micro or mesopores (0 > 14 Å) and cavities, providing the array with a high specific surface and great adsorption capacity. The most important IMS are zeolites; chemically, they are aluminium silicates with aluminium atoms in tetrahedral coordination, causing a negative charge which must be compensated by intracrystalline cations. Another group of IMS are aluminium phosphates (AIPOs), with aluminium and phosphorous in tetrahedral coordination forming an electrically neutral network and, therefore, without compensation cations. Finally, there are the SAPOs and MAPOs, wherein in addition to aluminium and phosphorous other elements are introduced such as silicon and transition metals respectively.

The clays, fundamentally the phyllosilicates, have also shown themselves to be suitable materials for preparing release compositions of semiochemical substances with sustained-release rate. Most of the physicochemical properties of clays arise from their laminar or fibrillar morphology (in the case of sepiolites or palygorskite) and small particle size. Both factors combined give a high specific surface value of these materials and, in turn, the presence of a large quantity of active surface, with unsaturated bonds. Therefore, they may interact with different substances, in particular, polar compounds, among which water is the most important. Thus, preferred clays are fibrous such as sepiolite, palygorskite and mixtures of same.

According to the present invention, the release formulation includes one or several semiochemicals, in a quantity between 0.01 and 60%, preferably between 5 and 20%, and even more preferably between 8 and 15% by weight compared with the total weight of the release formulation. Semiochemical is understood to mean any chemical product involved in Insect communication (pheromones, para-pheromones, kairomones, allomones, food attractants) according to the classification of Howse [in, Howse, H; Stevens, I and Jones, O. (Eds.). 1998. Insect Pheromones and their Use in Pest Management]. Due to the versatility of these inorganic supports derived from the capacity, already known in the state of the art, to modify their physicochemical characteristics, these supports are capable of housing and modulating the release of any semiochemical, regardless of their chemical nature. For the formulation of the present invention, semiochemicals can be used such as pheromones, para-pheromones, kairomones, allomones, food attractants and mixtures of same. Therefore, in the present invention any semiochemical from the state of the art can be used such as those included in: EI Sayed, A. M. 2007. The Pherobase: Database of insect Pheromones and Semiochemicals., as well as those that may be described subsequent to the filing of this application.

Preferably for the present invention It is possible to select, without being restrictive, semiochemicals such as: 1, 7-dioxaspiro-5, 5,undecan and derivatives, z-3-methyl-6-isopropenyl-3, 9-decadienyl acetate, 3-methyl-6-isopropenyl-9-decenyl acetate, trimedlure, methyl- eugenol, cuelure, ammonium acetate, putrescine, cadaverine, methyl-pyrrolidine, trimethylamine, methylamine, dimethylamine, ethyl acetate, ferruginol, 2-methoxy-4-vinylphenol-gamma-nonanoic lactone, rhynchophorol, grandisol, grandlure I, grandlure II, grandlure III, grandlure IV, Z3Z13-18Ac, E3Z13-18Ac, Z3E13-18Ac, Z11- 16Ac, Z11-160H, Z11-16Ald, 12Ac, E2Z13-18Ac, E3Z13-18Ac, Z11-16Ald, Z9-16Ald, Z13-18Ald, Z7E11-16Ac, 27Z11-16Ac, E7Z9-12Ac, p-cymene, caryophyllene, tetradecanol, ethyl-E2Z4-decadienoate, butylhexanoate, E8E10-120H, and mixtures of same.

In a particular embodiment of the present invention said formulation comprises:
a) one or more inorganic release supports
b) one or more additives that stabilise the support and
c) one or more insecticides.

Said insecticide substances, substituting or not the semiochemical substances, may be present in a quantity between 0.01 and 60%, preferably between 5 and 20%, and even more preferably between 8 and 15% by weight compared with the total weight of the release formulation.

Said Insecticide substances may be selected from among the different insecticide groups (organophosphates, carbamates, nicotinoids and neonicotinoids, botanical insecticides, pyrethroids, etc.) provided that the requirement of having high vapour pressure and high volatility is met.

It is possible to select, preferably, without being restrictive, insecticides such as the organophosphate dichlorvos or the pyrethroids empenthrin, transfluthrin, terallethrin, tefluthrin, fenfluthrin, metofluthrin, profluthrin, or mixtures of same.

In certain particular embodiments of the present invention, the release formulation comprises stabilising additives specifically provided to avoid the degradation of the semiochemicals. Many of the semiochemicals (mainly pheromones) commercially used for insect control strategies are mono- and di-unsaturated aliphatic compounds of molecular weight less than 300, which have, as functional groups, alcohol, acetate, aldehyde or ketone and derivatives of same. All of them, to a greater or lesser extent, may undergo oxidative decomposition catalysed by UV light, by oxygen or by both, according to the nature of the compound. Therefore, the additives that stabilise the semiochemical substance include UV filters and antioxidant compounds.

According to these particular embodiments, the, at least one, antioxidant is found in quantities between 0.2 and 5% by weight compared with the total weight of the release formulation, even more preferably between 0.5 and 4 % by weight.

Among the antioxidants, it is possible to select all those compounds that, according to the state of the art, have been appropriate for the protection of a certain semiochemical. In general, It is possible to select, preferably, without being restrictive, compounds belonging to the antioxidant phenols (such as, for example butyl-hydroxyanisol (BHA), butyl-hydroxytoluene (BHT), terc-butyl-hydroquinone), compounds from the group of phenylenediamines, palmityl ascorbate, alpha-tocopherol, or mixtures of same.

According to these particular embodiments, the, at least one, UV filter is found in quantities between 0.2 and 5% by weight compared with the total weight of the release formulation, even more preferably between 0.5 and 4 % by weight.

As in the case of the antioxidants, among the UV filters it is possible to use, without being restrictive, compounds of the state of the art belonging to the group of hydroxybenzophenones, aminobenzoates or carbon black, being especially effective the mixture of one or more colouring agents with carbon black, for example, colouring agents such as the so-called "Waxoline dyes" (ICI).

According to the present invention, the additives that stabilise the support must provide the release formulation with the suitable consistency according to the final formulation type. Said release formulation may be in the form of viscous liquid to be dispersed, sprayed or atomised, or may be in solid form. As solid the formulation may be in the form of powder, granules or in the form of conglomerate or tablet, to be applied manually or by mechanical devices. Likewise, the additives give the formulation a hydrophobic character, essential to have a suitable behaviour in the field, especially when they are isolated release media (tablets). Additionally, the inclusion of these additives has been seen to modify the release of the semiochemical, generally, slowing it down. This is very positive as It makes it possible to have an important additional parameter whereby to modulate the release of the semiochemical depending on release requirements; in this way, it contributes to giving greater versatility to the already intrinsic inorganic media.

Among the additives stabilising the release compositions it is possible to select, always following degradability criteria, bio-, photo- or environmentally degradable from the state of the art, and mixtures of same. These polymers may be natural polymers, synthetic polymers, natural polymers synthetically modified and mixtures of same.

Among the natural polymers polysaccharides such as cellulose, dextrans, polyhyaluronic acid, acrylic and methacrylic ester polymers and some of the most common biodegradable plastics such as poly(dihydroxy acid) polyesters (polyglycolic acid, polylactic acid, polycaprolactone, polyhydroxybutyrates, polyhydroxyvalerate) have special interest.

Among the synthetic polymers it is possible to select preferably, but without being restrictive, also biodegradable plastics such as vinyl polymers (polyvinyl alcohol, polyvinyl acetate, ethylene vinyl alcohol).

Natural polymers synthetically modified include alkylcelluloses, hydroxyalkylcelluloses, cellulose ethers, cellulose esters and nitrocelluloses. The following are also of special interest, without being restrictive: polymers of methylcellulose, ethylcellulose, hydroxypropylcellulose, hydroxypropyl methyl cellulose, hydroxybutyl methyl cellulose, cellulose acetate, cellulose propionate, cellulose acetate butyrate, cellulose acetate phthalate, etc.

The most preferred polymers are cellulose acetate, cellulose acetate butyrate, polyvinyl acetate and mixtures of same.

In particular embodiments of this invention, the release formulation contains complementary additives to produce highly hygrophobic products, capable of remaining directly exposed in the field, without an additional protector device. Therefore, wax products are included in the formulation, in quantities preferably between 5 and 95%, preferably between 10 and 50% compared with the total weight of the release formulation. Wax is understood to mean the mixture or organic compound of low melting point and high molecular weight, solid at ambient temperature. It is possible to select from the different, vegetable, animal and mineral waxes, their refined products and mixtures of same. Use thereof may be individual or combining several of these materials. Among the vegetable waxes it is possible to select products such as the wax of date palm leaves (carnauba wax), of herbs and shrubs (candililla wax), of fruit and roots (Japan wax).

Among the vegetable waxes it is possible to select products such as wax from insects (beeswax), mammals (lanolin, whale sperm). Among the mineral waxes it is possible to select products such as wax extracted from lignite (lignite wax), those obtained from oil (paraffins, microcrystallines) or those purely mineral (ozokerites, ceresin).

These compositions may prepared so that they can be applied by mechanical systems, by spraying, or manually, in the case of isolated release media. In this last case, using this type of release media would contribute to making techniques such as mating disruption, where a very high number of release media per hectare are used, economically competitive; in this respect, removing the additional device would be frankly beneficial.

According to a particular embodiment the compound is a paraffin, totally saturated, and several commercially available types are found depending on their melting point. The use temperature in the field and the type of final formulation will determine which type should be used.

The present application also has the object of use of a formulation as has been defined for the monitoring and control of the populations of agricultural and forest insects. Said monitoring and pest control of insects can be carried out with techniques selected from among surveillance of the population (monitoring), mass capture, mating disruption and attractlcide-baited traps. The attracticide-baited traps may be attraction and death, attraction and chemical sterilisation or attraction and contamination.

The release formulation obtained in this invention, as stated above, can be applicable in the form of viscous liquid, powder, granules, tablets or conglomerates of any geometry and size desired. Likewise, they can be applied manually or using any conventional mechanical device.

In accordance with the above, the present invention provides new release formulations of semiochemical substances which allow the sustained and lasting release of the semiochemicals used in the ecological battle against agricultural and forest Insect pests and which considerably improve the release compositions that had previously been claimed by the same authors of the invention in patent applications WO 99/44420 and WO 00/02448.

### DESCRIPTION OF FIGURES

Figure 1. Shows the release of TML. from the sepiolite tablet with additives and without additives, the influence of the incorporation of additives in the trimedlure release compositions, the para-pheromone of *Ceratitis capitata,* Evaluation in field conditions.
Figure 2.- Shows the evolution of captures of standardised TML tablets; the effect of the inclusion of additives in the trimedlure release compositions on the attraction efficacy of *Ceratitis capitata,* in field conditions.
Figure 3.- Influence of the additives on the release curves, in laboratory conditions, of sepiolitic release media for the mating disruption of *Lobesia botrana.*
Figure 4.- Evaluation In field of the new sepiolitic release media for the mating disruption of *Lobesia botrana,* by direct determination of damages.
Figure 5.- Development of a hydrophobic release medium which maintains the release characteristic of the sepiolitic release medium of the pheromone of *L. botrana,* Comparative graphic representation of the release kinetics of both release media in field conditions.
Figure 6.- Shows the comparative of ammonium acetate release media, in particular the effect of the inclusion of paraffin on the release characteristics of the ammonium acetate tablet with additives,

### EXAMPLES

### Example 1.- Study of the release of the para-pheromone of Ceratitis capitata (Wiedemann), trimedlure, in inorganic media (sepiolite) with and without additives.

Two types of tests are performed to be able to study the release of the different types of release media:

A release test, wherein the quantity of residual trimedlure (TML) in the release media is measured after 30, 75 and 150 days. In this way we can calculate the quantity of TML released and we can perform a release kinetics test.

An attraction efficacy test wherein we control the number of flies attracted in accordance with the exposure time (after 15, 30, 75 and 150 days) of the tablets in the field.

### Description of the tests

### Release test:

12 sepiolite release media are manufactured with TML and 12 sepiolite+10% polyvinyl acetate with TML release media. In the first case, the TML is dissolved in the solvent dichloromethane (DCM) in the appropriate quantity to obtain a percentage of 20% with respect to the sepiolite per release medium. After the sepiolite is added, it is stirred to homogenise the mixture and the excess solvent is evaporated. In the second case, the quantity of polyvinyl acetate (10% with respect to the sepiolite) is dissolved in the DCM before adding the TML, and then the same was done as in the previous case. Once there is the two types of sepiolite impregnated the materials are compacted in a hydraulic press to obtain tablets 5 grams in weight.

Three release media of each type are extracted, by maceration, with dichloromethane to see the real load of TML at 0 time using gas chromatography with internal standard. The other release media are introduced in McPhail traps and they are taken to the field so that they age in real conditions. For each selected aging time (30, 75 and 150 days) 3 tablets of each type are taken, the TML extracted and it is analysed by GC. In this way we obtain the residual quantity of TML and, therefore, the TML released between each time interval.

### Attraction efficacy test:

12 sepiolite release media are manufactured with TML and 12 sepiolite +10% polyvinyl acetate with TML release media, as In the release test. Each TML release medium is introduced in a plastic McPhail trap together with a tablet of the organophosphate insecticide dichlorvos (DDVP) to kill the flies attracted. A block study is performed so that each of the 4 blocks is formed by a trap with sepiolite release medium and DDVP and another trap with sepiolite + polyvinyl acetate and DDVP release medium. The traps of each block are placed 30 metres from one another and a distance of 100 metres is left between each block.

The flies captured by each trap are checked after 15, 30, 75 and 150 days, and the captures achieved with each type of release medium are averaged out.

### Results

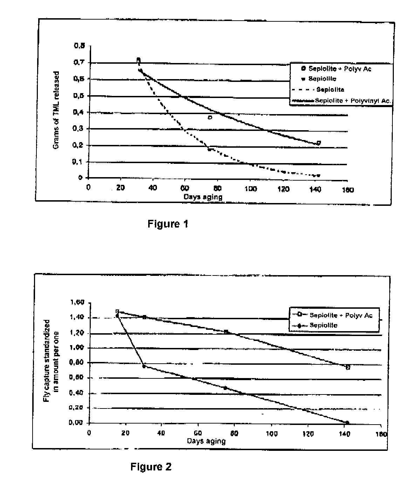

Figure 1 shows the release curves of the two types of tablets prepared. It is observed that the inclusion of the polyvinyl acetate additive notably modulates the release of the TML showing a much more moderate, regular and, therefore, prolonged release trend than in the case of the tablets formed only by sepiolite and semiochemical.

This is translated, in practice in the field, into a higher capture index which is more stable over time by the formulation which has the additive added (figure 2). It should be highlighted that the sepiolite tablets without additives soon start to crack, due to the effect of humidity and end up by disintegrating which causes an abnormal release of TML and a decrease in the useful life of the release medium, whilst the other tablets remain intact beyond the end of the experiment.

### Example 2.- Development of release media for the mating disruption of the grape moth. Lobesia botrana.

### 2.1.- Influence of the stabilising additives on the pheromone release kinetics.

This example illustrates the influence of the inclusion of additives in sepiolite tablets as medium of the *Lobesia botrana* pheromone, E,Z-7,9-dodecadienyl acetate.

Preparation of the tablets.

To perform this study, the following compositions have been developed per release medium:
CEQA composition: sepiolite + 10% pheromone (200 mg) + 5% silicon oil.
CEQA composition + additives: sepiolite (68%) + cellulose acetate (15%) + pheromone (10%) + silicon oil (5%) + carbon black (1%) + BHT (1%).

### Methodology.

The sepiolite in powder is impregnated with a dichloromethane solution which contains, dissolved, the suitable quantities of silicon oil and pheromone. This solution is maintained under stirring and the sepiolite is poured on it. Excess dichloromethane is left to evaporate, at ambient temperature, until the mixture is dry. Then the impregnated sepiolite is compacted to obtain release media 18 mm in diameter, In a hydraulic press, with initial theoretical loads of 200 mg of pheromone per release medium.

The tablets of both types are Introduced in a chamber with constant temperature and air speed conditions (30°C and 0.35 m/s). Periodically, three tablets of each type are removed and, after solid-liquid extraction in sohxlet, with dichloromethane and analysis by gas-liquid chromatography with internal standard, the residual content of pheromone is obtained. We thus obtain the pheromone release curve that will allow us to compare the compositions.

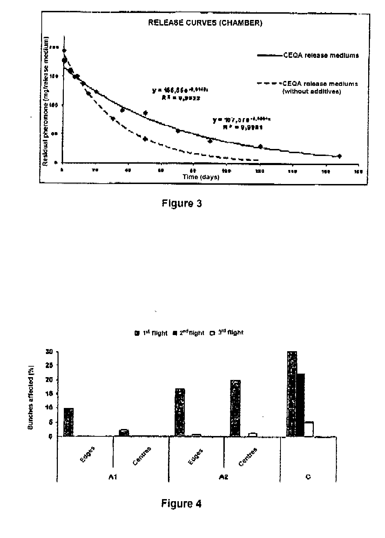

Figure 3 shows the release curves obtained with the two compositions. It is again observed that the inclusion of additives in the formulation, in addition to improving tablet stability, also considerably improves their release characteristics, with a much more regular and moderated release, fundamentally at the start of the release medium life. The behaviour of the release media adjusts to a first order exponential curve; the time of average life of each type of release medium is calculated from them, obtaining 46.8 and 23.0 days for the compositions with and without additives, respectively, which means that the average life of the release media has been successfully doubled.

### 2.2.- Field efficacy test

A field test has been carried out to assess the efficacy of the previous release media (with additives) by mating disruption.

The field test was carried out in a 10-hectare plot of commercial vines in the area of Los Ruices (Requena, Valencia, Spain) formed by two adjacent subplots (Subplot A1: Tempranillo variety and stocks arranged in the trellis system and, Subplot A2: Bobal variety with low cordon stocks), It additionally considered a standard plot (Zone C) where the moth was controlled conventionally.

The release media were placed in the disruption area in a density of 500 release media per hectare reinforcing the edges, where they were placed doubling the density. These release media were placed with a protector device which consisted of an upturned plastic bell with a grille which supported the release medium, so that they were protected from the light and the rain.

The efficacy of the disruption technique was assessed, indirectly, determining the reduction in captures in the disruption zones by monitoring traps and obtaining the Capture Inhibition Index (CII), following the formula: CII_{cs}=100- [(C_{CS}/C_{SD}) x 100)], where CII_{CS} is the reduction in captures in the disruption zone (%), and C_{CS} and C_{SD} are the captures recorded per trap and day in the disruption zones and in the control plot, respectively. Additionally, the efficacy was directly assessed by observation of damages in inflorescences (First generation) and bunches (second and third generation).

Table 1 shows the evaluation of the efficacy of the mating disruption technique of *Lobesia botrana* in accordance with the reduction in captures (Capture Inhibition Index). It specifically shows the results of the CIIs obtained throughout the three generations in the disruption zone. It is observed that, in all generations, the release media released a sufficient quantity of semiochemical to disorientate the males. Only during the first generation was any capture observed in the edges possibly due to the phenomenon of immigration of adults from neighbouring plots. In the centres of the plots, the disruption gave excellent results.

### Table 1.-

**Table 1.**

| | Edges | Centres |
|---|---|---|
| 1^{st} generation | 94.11± 2.09 | 96.34±0.82 |
| 2^{nd} generation | 100 | 100 |
| 3^{rd} generation | 99.55 | 100 |

As in the previous case, the direct observation of damages also showed a high release medium efficacy, as observed in figure 4. It was especially effective in subplot A1 (tempranillo variety and trellis growth) where only minor damages were observed during the first generation. Subplot A2 (bobal variety, traditionally fairly susceptible to attacks from *L. botrana,* and low cordon growth) had a high percentage of damages which made it necessary to apply traditional insecticide. However, once the population was reduced it no longer needed any treatment in second and third generation.

For its part, the control zone was chemical treated during the third generation because the pest levels so advised. Despite this, the disruption treatment was even more effective.

### 2.3.- Optimization of the sepiolitic release medium, which has shown itself to be effective in the field, to improve its economic competitiveness.

Once the efficacy of the new release medium was confirmed in the field, the objective was to optimize it by introducing the appropriate modifications so that a release medium was obtained, with the same release characteristics, but which permitted its placement in the field without additional protection devices. For this purpose, high proportions have been Introduced of wax products until achieving a hydrophobic and stable release medium, which may remain directly exposed in the field, eliminating the protector device.

### Materials:

CEQA release medium: sepiolite (68%) + cellulose acetate (15%) + pheromone (10%) + silicon oil (5%) + carbon black (1%) + BHT (1%).
Hydrophobic CEQA release medium (Lob-3H-06): sepiolite (45%) + beeswax (23%) + cellulose acetate (15%) + pheromone (10%) + silicon oil (5%) + carbon black (1%)+BHT (1%).

### Methodology:

The following methodology is used for the formulation of the new hydrophobic release medium, In first place, the beeswax was melted and the corresponding sepiolite introduced, stirring until obtaining a homogeneous mixture. Next, the same is done as in the formulation of the CEQA release medium + additives, described in example 2.1.

In this case, the aging of the release media is carried out in real field conditions, for almost 5 months, during the pest control period (from April to September) in the Requena area (Valencia, Spain).

### Results:

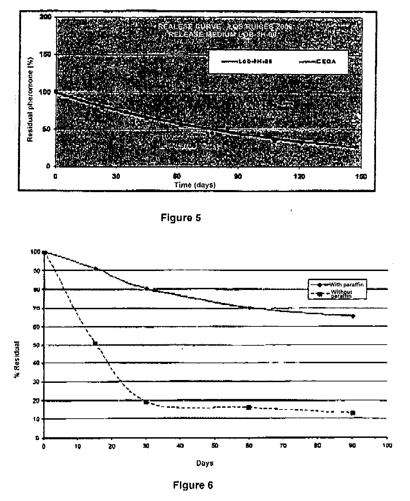

Figure 5 shows that the kinetics are practically identical, for which reason this last release medium may replace without problems that which had previously shown itself to be effective in the field. In this way it has been managed to reduce the cost of the release medium and, therefore, increase method competitiveness.

### Example 3.- Development of release media of the semiochemical ammonium acetate, attracting female tephritids. Influence of the stabilising additives.

A comparative study has been performed to see the stability of the ammonium acetate tables, seeking formulations which may remain active in the field the greatest possible time. This semiochemical in question is very complicated since it is highly hygroscopic.
Composition without paraffin: 50% ammonium acetate + 38% palygorskite + 12% cellulose acetate.
Composition with paraffin: 50% ammonium acetate + 18% paraffin + 20% palygorskite + 12% cellulose acetate.

Figure 6 shows the differences found on including paraffin in the formulation. As can be observed, paraffin considerably improves the stability of the tablets giving release media with a useful life in the field over four months.

## Claims

1. A formulation for the release of bioactive substances **characterised in that** it comprises at least:
a) one or more inorganic release supports
b) one or more additives that stabilise the support and
c) a third component selected from among
c.1) one or more semiochemical substances
c.2) one or more insecticides and
c.3) combinations of c.1 and c.2.

2. A formulation for the release of semiochemical substances **characterised in that** it comprises at least:
a) one or more inorganic release supports
b) one or more additives that stabilise the support and
c.1) one or more semiochemical substances.

3. A formulation according to claim 1, **characterised in that** the inorganic release support is selected from among inorganic molecular sieves, clays and mixtures of same.

4. A formulation according to claim 3, **characterised in that** the inorganic release support is a fibrous clay.

5. A formulation according to claim according to claim 4, **characterised in that** the inorganic release support is a fibrous clay selected from among sepiolite, palygorskite and mixtures of same.

6. A formulation according to claim 4, **characterised in that** the semiochemical substance is selected from among pheromones, para-pheromone, kairomones, allomones, food attractants and mixtures of same.

7. A formulation according to any of the preceding claims, **characterised in that** it comprises one or more additives that stabilise the semiochemical substance.

8. A formulation according to claim 7, **characterised in that** said stabilising additive is selected from among one or more UV filters, one or more antioxidants and mixtures of same.

9. A formulation according to claim 8, **characterised in that** the UV filter belongs to the group of hydroxybenzophenones, aminobenzoates or carbon black,

10. A formulation according to claim 9, **characterised in that** the UV filter is a mixture of one or more colouring agents with carbon black.

11. A formulation according to claim 8, **characterised in that** the antioxidant is selected from among antioxidant phenols, phenylenediamines, palmityl ascorbate, alpha-tocopherol and mixtures of same,

12. A formulation according to claim 11, **characterised in that** the antioxidant is butylhydroxytoluene or terc-butyl-hydroquinone.

13. A formulation according to any of the preceding claims, **characterised in that** it comprises one or more additives that stabilise the support.

14. A formulation according to claim 13, **characterised in that** the additives that stabilise the support are selected from among photodegradable biodegradable polymers, environmentally degradable and mixtures of same.

15. A formulation according to claim 14, **characterised in that** the additives that stabilise the support are selected from among natural polymers, synthetic polymers, natural polymers synthetically modified and mixtures of same.

16. A formulation according to claim 14, **characterised in that** the additives that stabilise the support are selected from among cellulose, dextrans, polyhyaluronic acid, acrylic and methacrylic ester polymers, poly(dihydroxy acid) polyesters, polyvinyl alcohol, polyvinyl acetate, ethylene vinyl alcohol, alkylcelluloses, hydroxyalkylcelluloses, cellulose ethers, cellulose and nitrocellulose esters, the polymer of methylcellulose, ethylcellulose, hydroxypropylcellulose, hydroxypropyl methyl cellulose, hydroxybutyl methyl cellulose, cellulose acetate, cellulose propionate, cellulose acetate butyrate, cellulose acetate phthalate and mixtures of same.

17. A formulation according to claim 14, **characterised in that** the additive is selected from among cellulose acetate, cellulose acetate butyrate, polyvinyl acetate and mixtures of same.

18. A formulation according to any of the preceding claims, **characterised in that** it additionally contains one or more wax compounds.

19. A formulation according to claim 18, **characterised in that** the wax compounds are selected from among animal, vegetable and mineral waxes, their refined products and mixtures of same.

20. A formulation according to claim 18, **characterised in that** the wax compound is selected from among carnauba wax, candililla wax, Japan wax, beeswax, lanolin, whale sperm, lignite wax, paraffins, microcrystallines, ozokerites, ceresin, and mixtures of same.

21. A formulation according to claim 18, **characterised in that** the wax compound is paraffin.

22. A formulation according to claim 18, **characterised in that** said release formulation is in a form selected from among viscous liquid and solid.

23. A formulation according to claim 1, **characterised in that** said formulation comprises:
a) one or more inorganic release supports
b) one or more additives that stabilise the support and
c) one or more insecticides.

24. A formulation according to claim 23, **characterised in that** said insecticide is selected from among an organophosphate insecticide, carbamate, nicotinoid and neonicotinoids, botanical insecticide, pyrethroid and combinations of same.

25. Use of a formulation as defined in any of the preceding claims, for the monitoring and control of the populations of agricultural and forest insects.

26. Use according to claim 25, **characterised in that** pest monitoring and control is carried out with techniques selected from among surveillance of the population, mass capture, mating disruption and attracticide-baited traps.

27. Use according to claim 25, **characterised in that** said formulation is applied in a form selected from among viscous liquid, powder, granules, conglomerate and tablets,

28. Use according to claim 25, **characterised in that** said formulation is applied by mechanical devices or manually.
